# EUROPEAN PATENT APPLICATION

(11) **EP 1 790 452 A2**
(43) Date of publication of application: **30.05.2007**
(21) Application number: 06394023.3
(22) Date of filing: 24.11.2006
(51) Int. Cl.: B29C 44/32, B29C 44/34

(54) **Manufacture of insulating board**

(30) Priority: 25.11.2005 IE 20050787
(71) Applicant: Kingspan Research and Developments Limited, Kingscourt, County Cavan (IE)
(72) Inventor: Rochefort, Malcolm, Kingscourt County Cavan (IE); McCabe, Thomas, Kingscourt County Cavan (IE)
(74) Representative: O'Brien, John Augustine

(57) **Abstract**

A rigid polymeric insulating foam board comprises an upper facing 2, a lower facing 1 and a foam layer 3 between the facings 1, 2. The foam sandwich is delivered into an oven 10 and the continuous length of foam board exiting the oven is delivered through a curing station A. The foam board is cut to length B, trimmed C, optimally re-bated D, the cut board lengths are stacked E and wrapped F. A cooling station 50 for the wrapped stacks 55 comprises upper and lower stack conveyors 51, 52. Scissors-type lifters 56, 57 are provided at the infeed and outfeed end to divert a stack 55 to or from a cooling conveyor 51, 52.

## Description

### Introduction

The invention relates to the manufacture of a rigid polymeric insulating foam board of the type comprising upper and lower facers and a foam insulating body between the facers.

There are several known methods for manufacturing such rigid polymeric insulating foam boards. There is, however, a need to optimise the rate of production of such boards with optimised quality, reduced raw material costs, reduced labour costs and reduced reject rates.

This invention is directed towards providing an improved manufacturing process which will meet at least some of these requirements.

### Statements of Invention

According to the invention there is provided a method for manufacturing a rigid polymeric insulating foam board of the type comprising a lower facer, an upper facer, and a foam layer between the facers, the method comprising the steps of:
leading a base facer to a lay-down area;
laying liquid foam reactants onto the base facer;
leading an upper facer over the foam reactants;
leading the sandwich thus formed into an oven;
leading the foam board from the oven through a foam curing station;
cutting the cured foam board to a length;
stacking the cut lengths of board in a stack; and
cooling the stacks of boards.

In one embodiment the stacks of boards are cooled by leading the stacks through a cooling station.

The cooling station may comprise a conveyor along which the stacks are led. The cooling station may comprise at least two stack conveyors. In one case the method comprises the step of selecting one of the stack conveyors and leading a stack to and from the selected conveyor. The conveyors may comprise an upper stack conveyor and a lower stack conveyor.

In one embodiment the stacks are wrapped prior to leading the stacks through the cooling station.

In one case the liquid foam reactants are laid down in a plurality of spaced-apart streams onto the base facer.

The method may comprise heating the base facer with the streams applied thereon, prior to application of the upper facer.

In one embodiment the oven comprises a laminator having upper and lower laminator conveyors, the upper laminator conveyor checking the rise of the foam and preventing over-expansion.

The method may comprise the step of in-line cutting a rebated edge in the panel. The rebated edge may be a side edge and/or the rebated edge is an end edge.

The invention also provides a rigid foam board when manufactured by a method of the invention.

### Brief Description of Drawings

The invention will be more clearly understood from the following description thereof given by way of example only with reference to the accompanying drawings in which:-
Fig. 1 is a diagramatic view illustrating various steps in a method for manufacturing a foam board according to the invention;
Fig. 2 is an elevational view of a stack cooling station used in the method of the invention;
Fig. 3 is a side cross sectional view of a lay down and oven region of the apparatus used in the method of the invention;
Fig. 4 is a cross sectional view on the line A-A in Fig. 3;
Fig. 5 is a cross sectional view on the line B-B in Fig. 3;
Fig. 6 is a cross sectional view on the line C-C in Fig. 3, and
Fig. 7 is a cross sectional view of a laminator used in the method of the invention.

### Detailed Description

The invention provides a method for manufacturing a rigid polymeric insulating foam board comprising a lower facer 1, an upper facer 2 and a foam layer 3 between the facers.

The upper and lower facers 1, 2 may be of the same or different flexible materials. For example the or each facer may be of a paper, foil, glass fibre, plastic or any other suitable material or laminate of two or more of such materials.

The foam 3 may be of any suitable type including a polyurethane, polyisocyanurate or phenolic foam formed from appropriate reactant ingredients.

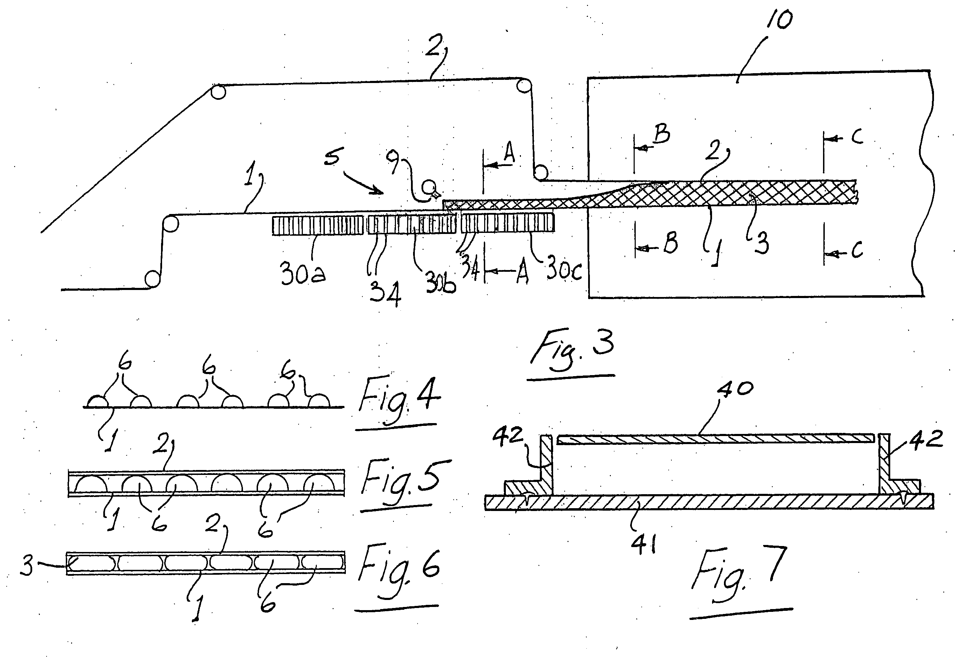

Referring particularly to Figs. 3 to 5, in the method of the invention the lower facer 1 is led from a supply reel to a lay-down area 5 at which streams 6 of liquid foam reactants are laid down onto the lower facer 1 through separate nozzles 9. The upper facer 2 is led from a supply reel over the foam reactants. The sandwich thus formed is then led through a laminator oven 10 in which the foam expands and a continuous length of rigid polymeric insulating foam board 15 is formed. The board 15 is led through an insulating tunnel 20 and then cut to a desired length.

The lower facer 1 is preheated by leading the facer 1 over a heated bed 30 which is heated to a temperature of from 35 to 85°C. In this case the heated bed 30 comprises three separate in-line sections 30a, 30b, 30c over which the facer 1 is led and the nozzles 9 through which the streams 6 of liquid foam reactants are led are located at the downstream end of the second heater bed section 30b. Each of the heater bed sections 30a, 30b, 30c has embedded channels for flow of heating fluid. Between the channels the bed sections have a plurality of through vertical passageways 34 through which a vacuum may be drawn by a vacuum box and associated vacuum pump. A vacuum may be applied to the passageways 34 to draw the facer 1 onto the surface of the heater to further enhance heat transfer to the facer.

The heater bed sections 30a, 30b are typically heated to about 60°C and as the facer 1 is led over the heated bed it is heated so that when the liquid foam reactants 6 impinge on the facer they are immediately heated. This speeds up the reaction and aids the spread of the streams 6 across the facer from the separated configuration of Fig. 4 on lay-down, through a partially spread configuration of Fig. 5 on entry to the laminator 10 to the fully spread and expanded configuration of Fig. 6. The facer 2 is also preheated by passage through portion of the laminator 10 which is typically at about 60°C prior to application to the foam. Because the facer 1 is preheated to the prepolymer reactants delivered through the nozzles 9 can be relatively cool which maximises the useful operating life of the nozzles 9. The preheating of the facer leads to a smooth outer surface finish as the separate streams 6 spread and integrate with one another forming flat outer surfaces. Thus, problems of de-lamination are avoided. The method therefore provides a rigid polymeric insulating board with an excellent consistent surface finish.

Referring to Fig. 7 the laminator 10 may comprise an upper slatted conveyor 40 and a lower slatted conveyor 41 which define a fixed gap therebetween to which the foam sandwich is allowed to rise. The upper laminator conveyor 40 checks the rise of the foam and prevents over-expansion. In this case side flights 42 are fixed to and move with the lower conveyor 41. Each slat of the conveyor 41 has an associated side flight 42. A release agent is applied to the surface of the flights 42 facing the foam board sandwich to aid release of the flight 42 from the board as the board exits the laminator. The flights 42 provide clean side edges on the foam board which minimises wastage on trimming.

In the invention, the foam board is led from the oven through a foam curing station comprising a conveyor along which the foam board is led and a substantially closed housing for the conveyor. Heated air at a temperature of at least 30°C and possibly up to 130°C is directed through the housing.

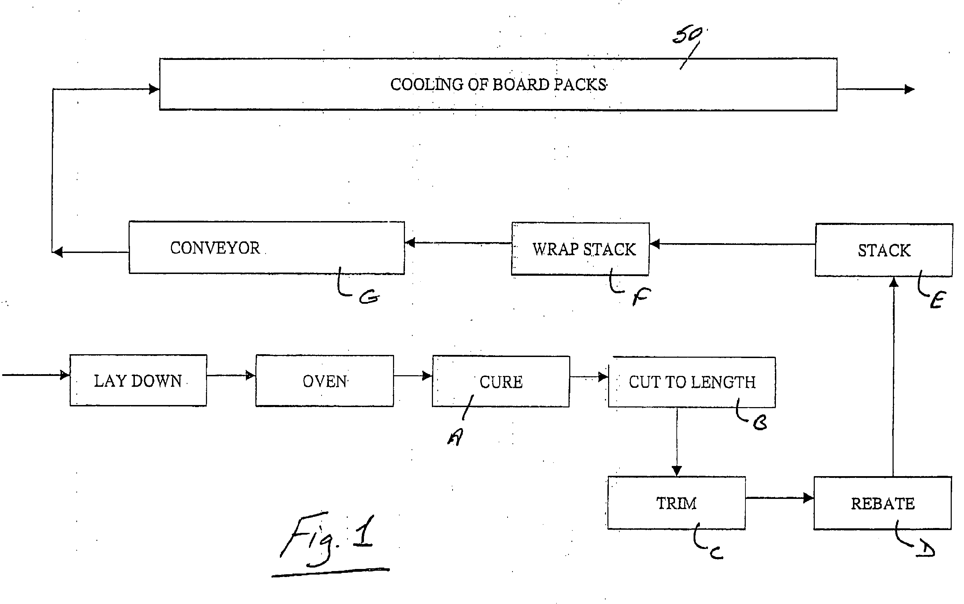

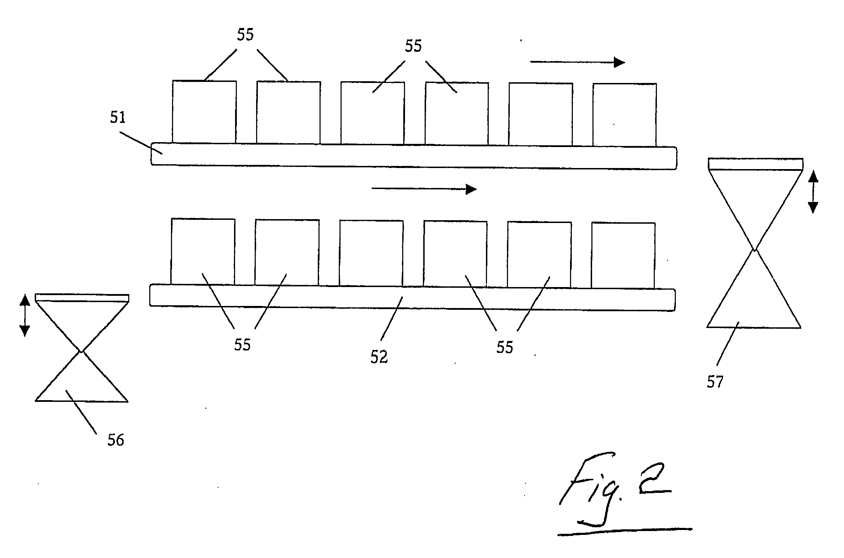

Referring to Figs. 1 and 2, after curing A, the foam board is cut to length B, and the side edges of the board are trimmed C and, if desired, one or more side edges of the board are re-bated D on-line. The board lengths are then stacked E and a stack of the cut boards is wrapped F and then delivered by a conveyor G to a cooling station 50 for the wrapped packs of board lengths.

The cooling station 50 for the wrapped packs is illustrated in Fig. 2 and comprises upper and lower pack/stack conveyors 51, 52 along which packs 55 are led for cooling. Scissor-type lifters 56, 57 are provided at the infeed and outfeed from the cooling station for receiving and directing a pack to or from a lower or upper pack cooling conveyor 51, 52.

We have found that the pack cooling station optimises production. The foam board stacks, after cooling, can be handled efficiently by being placed side-by-side or stacked one upon another without distortion of the boards and without thermoplastic packaging materials from adjacent stacks sticking together. The rate of production and quality is optimised with reduced costs, especially due to reduced rejects.

The invention is not limited to the embodiments hereinbefore described which may be varied in detail.

## Claims

1. A method for manufacturing a rigid polymeric insulating foam board of the type comprising a lower facer, an upper facer, and a foam layer between the facers, the method comprising the steps of:
leading a base facer to a lay-down area;
laying liquid foam reactants onto the base facer;
leading an upper facer over the foam reactants;
leading the sandwich thus formed into an oven;
leading the foam board from the oven through a foam curing station;
cutting the cured foam board to a length;
stacking the cut lengths of board in a stack; and
cooling the stacks of boards.

2. A method as claimed in claim 1 wherein the stacks of boards are cooled by leading the stacks through a cooling station.

3. A method as claimed in claim 2 wherein the cooling station comprises a conveyor along which the stacks are led.

4. A method as claimed in claim 2 or 3 wherein the cooling station comprises at least two stack conveyors.

5. A method as claimed in claim 4 comprising the step of selecting one of the stack conveyors and leading a stack to and from the selected conveyor.

6. A method as claimed in claim 4 or 5 wherein the conveyors comprise an upper stack conveyor and a lower stack conveyor.

7. A method as claimed in any of claims 2 to 6 wherein the stacks are wrapped prior to leading the stacks through the cooling station.

8. A method as claimed in any preceding claim wherein the liquid foam reactants are laid down in a plurality of spaced-apart streams onto the base facer.

9. A method as claimed in any preceding claim comprising heating the base facer with the streams applied thereon, prior to application of the upper facer.

10. A method as claimed in any preceding claim wherein the oven comprises a laminator having upper and lower laminator conveyors, the upper laminator conveyor checking the rise of the foam and preventing over-expansion.

11. A method as claimed in any preceding claim comprising the step of in-line cutting a rebated edge in the panel.

12. A method as claimed in claim 11 wherein the rebated edge is a side edge.

13. A method as claimed in claim 11 or 12 wherein the rebated edge is an end edge.
